# EUROPEAN PATENT SPECIFICATION

(11) **EP 3 867 660 B1**
(45) Date of publication and mention of the grant of the patent: **06.05.2026**
(21) Application number: 18942983.0
(22) Date of filing: 13.12.2018
(51) Int. Cl.: G07C 9/22, G07C 9/27, G07C 9/28, F16P 3/08, F16P 3/14, G06Q 50/04, G06Q 50/26, G06Q 10/0639, G06Q 10/06, G06Q 50/08

(54) **PERSONNEL MONITORING AND LABOR PRODUCTIVITY ANALYSING SYSTEM**
PERSONALÜBERWACHUNGS- UND ARBEITSPRODUKTIVITÄTSANALYSESYSTEM
SYSTÈME DE SURVEILLANCE DE PERSONNEL ET D'ANALYSE DE PRODUCTIVITÉ DU TRAVAIL

(30) Priority: 12.12.2018 TR 201819243
(43) Date of publication of application: 25.08.2021
(73) Proprietor: Mekap Deri Ve Ayakkabi Sanayi Ticaret Anonim Sirketi, Trabzon (TR)
(72) Inventor: YAVUZ, Remzi, Trabzon (TR); SEVIK, Ugur, Trabzon (TR); BERBER, Tolga, Trabzon (TR); ERDOL, Hakan, Trabzon (TR)
(74) Representative: Sevinç, Cenk
(86) International application number: PCT/TR2018/050803
(87) International publication number: WO 2020/122825

(56) References cited:
- EP-A1- 2 653 772
- US-A1- 2016 125 348
- US-A1- 2017 245 806
- US-A1- 2018 114 425
- US-A1- 2018 211 345
- US-A1- 2018 211 345

## Description

### Technical Field of the Invention:

The present invention relates to a personnel monitoring and labor productivity analyzing system that allows the matching of machine and a work environment through the means of passive RFID labels, that monitors personnel and that allows for conducting search and rescue following a potential accident.

The present invention relates particularly to a personnel monitoring and labor productivity analysis system that allows for matching of working environment and the machine operated with by means of passive RFID labels that is placed inside safety boots, that is of heat-resistant characteristic and that does not require energy to function, that transfers data by using wireless mesh network topology and provides warning features by means of efficient reporting.

### State of the Art:

Due to developments observed specifically in industrialization, factories are becoming more and more obliged to take measures towards occupational safety against risks present in the working environment. Particularly in industrial enterprises where manpower is a necessity, many precautions and measures are to be taken with regards to the posing of potential risks. In the scope of these measures the location of personnel, the machinery he/she has access to and the safety of these machines have a great importance. There are many available systems developed because of this reason.

Occupational safety systems such as pinpointing personnel's location and access restrictions introduced to operating of machines provide assistance in prevention of potential accidents. Occupational safety includes measures and precautions taken for the prevention of potential risks that were envisaged or that may arise suddenly while conducting operations and actions in the present state and under working conditions in a workplace. However, against all the measures and precautions taken, accidents (natural disasters) still may happen. In addition to occupational accidents, natural disasters such as earthquakes and fires may also occur and consequently search and rescue operations are carried out following the destruction that came to pass. Being able to get information regarding whether there are personnel buried in the wreckage and if there is to know what their last position was and being able to pinpoint the locations of people who got trapped under debris caused by destruction is of vital importance.

Today, there are certain technologies available which can also be used by search and rescue teams in the wake of accidents and natural disasters. These systems include cameras, pinpointing locations of survivors by means of cell phone signal, and devices that utilize radar. The major disadvantage of these systems is that the location of survivors can be determined only by conducting random searches. In such cases, a false signal that may potentially be received or scanning and searching wrong sectors result in time loss and in the meantime a survivor who is in need of assistance remains destitute of help. Because of this reason being able to determine the intensity and the number of survivors in accident and disaster areas is crucial.

In addition to reasons related to occupational safety, monitoring of personnel within the working environment and in terms of clock in and out hours and performance data have great importance for enterprises. There are also many systems utilized in this regard.

NFC (Near Field Communication), RFID (Radio Frequency Identification) and suchlike cards that function through wireless communication are among the most commonly used systems in monitoring of clock in and out hours of employees. In these systems, NFC or Active RFID (having a power supply) cards are scanned to receivers by the users and by this means clock in and out hours can be put to control or permissions towards the operating of machinery can be identified by means of access given to the personnel. These systems also pose problems in terms of security, for example in case when an employee forgets his/her card inside the system, some other person who does not have access to this card and permissions and privileges it provides can misuse this card. Furthermore, since these systems are always in need of power they are to be supplied with energy constantly. In order to eliminate this problem towards the energy need, there are systems that utilize passive RFID. However, these systems too pose a security problem when a card is forgotten and used by some other person. Moreover, although card systems provide permission to access to limited area and can determine whether a person has entered that particular area or not, they cannot pinpoint the location of the cardholder within that area.

Furthermore, being able to determine employees who take long breaks within the working hours in the working area is another crucial point concerning the monitoring of personnel. A situation such as this cannot always be identified by the authorities inside. Despite the fact that cameras are usually utilized in this regard, since camera footage cannot be watched all the time, a constant monitoring cannot be performed.

Following the preliminary survey performed in the state of the art, the patent document bearing the number of 203149586 U was examined. In the invention which is the subject matter of the abovementioned application, a coal mine underground personnel positioning system is disclosed This positioning system comprises of a radio frequency scale cable, active radio frequency labels, a reader and a server.

Following the preliminary survey conducted in the state of the art, the patent document numbered US 2017/154341 A1 was examined. In the subject matter invention, a personnel monitoring system that is used for monitoring employees inside the workplace and their clock in and out hours, and to monitor the employee participation in various health safety environments is disclosed.

Following the preliminary survey conducted in the state of the art, the patent document numbered US 2018/114425 A1 was examined. In the subject matter invention, a system that works according to the security protocol to ensure that whether the personnel has the necessary safety equipment or not according to the occupational safety rules by computer controlling is disclosed.

Following the preliminary survey conducted in the state of the art, the patent document numbered US 2018/211345 A1 was examined. In the subject matter invention, a system including methods and apparatus to monitor whether the personnel use the personnel protective equipment or not and also the distance between the personnel and safety equipment is disclosed.

Following the preliminary survey conducted in the state of the art, the patent document numbered EP 2 653 772 A1 was examined. In subject matter invention, a system that monitors whether the personnel have security equipment by identifying the security equipment on the personnel by using image recognition is disclosed.

Personnel monitoring systems used in the state of the art usually functions through the means of scanning proximity or mifare cards or bracelets which are provided to personnel, at close range (10-20cm) to readers placed in door entrances. When this is the case, employees who work at an industrial enterprise where manual and hard labor is performed, employees may not always get the chance to scan their cards. For instance, when an employee is carrying a heavy load or when he/she is in a contaminated, dirty or in a hygienic environment, scanning a card at the same time will be difficult.

Consequently, abovementioned disadvantages and the inadequacy of available solutions in eliminating these disadvantages necessitated an improvement to be made in the related technical field.

### Object of the Invention:

It is therefore an object of this invention to estimate the efficiency and the performance of the personnel within the working hours by means of placing a passive RFID card inside personnel's safety boots and matching it automatically with the machinery actively operated by the worker and with the working environment. And to provide live monitoring and analysis towards personnel and labor productivity in working environments where it is mandatory to wear safety boots by this means.

It is thus another object of the present invention to determine whether personnel who wears his/her safety boots linked to this system is trapped under debris caused by a potential accident or earthquake or not and to ensure that the personnel is outfitted with proper equipment that allows pinpointing personnel's location in case where got he/she trapped under debris.

It is therefore another object of the present invention to record whether the personnel are within the limits of his/her designated working environment or not, his/her mobility within the day, for how long he/she operated which machinery, his/her labor performance, his/her unauthorized access to devices that require authorization and his/her unauthorized entrance to workstations and areas. By this means, a match with machines operated by personnel wearing safety boots on RFID can be made and thus the employee working with a particular machine and the amount of product he/she creates can be determined transiently.

It is thus another object of the present invention to collect data regarding the location and the performance of personnel without being affected by factors of work environment in enterprises having massive manufacturing and working areas by utilizing wireless technologies embedded in the structure of ARM-based mesh network.

It is therefore another object of the present invention to transfer the collected data to an analysis system having a cloud-based architecture and to perform analyses and estimations thereon and to send required reports and comments to authorities over world wide web and mobile devices.

It is thus an object of the present invention to record data automatically regarding between which sections the personnel moves (routing) and time info by means of the authorization feature of mandatory safety boots at sector entrances located within the industrial area.

It is therefore another object of the present invention to constitute source data regarding the personnel and relevant productivity for enterprise resource planning software or for insurance institutions.

It is thus another object of the present invention to facilitate entering and exiting authorized areas by means of safety boots without coming into contact with anything in sectors where hard labor is performed or in places where hygiene is of crucial such as hospitals and food production.

It is therefore another object of the present invention to collect data automatically regarding which products are consigned and which products are admitted by the personnel performing the loading of products in depots.

It is thus an object of the present invention to develop a system with novel characteristics by means of safety boots which are already mandatory to wear instead of personnel attendance control system (PACS) used for the entry and exit clearances of personnel. Biometric systems (fingerprint, facial recognition, palm print scanners) used in PACS systems may constitute cases that are contrary to Privacy Act. Since no biometric data will be utilized in the system to be developed, any institution will be able to utilize the subject matter system conveniently.

It is therefore another object of the present invention to automatically collect and report data regarding how long employees stayed within resting places (cafeteria, restrooms, etc.), for how long they worked in units they are required to or how long employees stayed outside. By this means, not only the productivity within the institutions but also the labor performance among employees will be subjected to assessment. Since these measures will be collected in a manner so that they will be close to real values, they will make a significant contribution to the enterprise.

The subject matter invention's structural features and characteristics and all its advantages will be understood clearly by means of the figures given below and the detailed description provided with references to the figures. For this reason, the evaluation should be conducted by taking these figures and the detailed description of the invention into consideration.

### Description of the Figures:

**Figure** - **1** illustrates the flow diagram view of the subject matter invention personnel monitoring system.

### Reference Numbers:

- **1.**: Passive RFID Label
- **2.**: Safety Boots
- **3.**: Data Transfer Module
- **4.**: Personnel
- **5.**: RFID Reader
- **6.**: Cloud Module
- **7.**: Work Area

### Disclosure of the Invention:

The present invention is defined by the appended claims.

The present invention is a personnel monitoring and labor productivity analyzing system that allows for pinpointing the location of personnel 4 transiently within the facility by means of equipping the safety boots 2 which are mandatory to wear within the limits of the work area 7 a passive RFID label 1 that does not require energy. By means of the subject matter system 4 vital data regarding time elapsed between the moment of entrance to the work area 7 and exit, immediate data relating to where the employee is located, whether there are any personnel 4 got trapped under wreckage or debris resulting from an accident or natural disaster and in case there is someone trapped under wreckage their last position and locating their position by means of the wreckage scanning system can be obtained.

The present invention is a system that comprises the characteristics of having passive RFID label 1 that does not require energy, heat resistant, that can operate in the frequencies of 125 kHz, 13.56 MHz and 860-960 MHz, that is made out of fabric material and that is placed on the tag section of the safety boots 2 during its manufacturing process which are required to be worn by law and that transfers data to cloud module 6 which analyzes labor productivity data by matching it with the working area and the machinery being operated through the assistance of wireless mesh network topology and that can give warnings through efficient reporting and that can provide data security by means of the cloud module 6.

In general terms, the subject matter invention personnel 4 monitoring and labor productivity analyzing system comprises of safety boots 2 that contain a passive RFID label 1, data transfer module 3, RFID reader 5 and cloud module 6.

Abovementioned safety boots 2 comprises a passive RFID label 1 in which the credentials of the personnel are defined. By this means, entrance and exit information of the personnel 4 to the work area 7 can be recorded. By the medium of authorization data input to the passive RFID label 1, the machinery that can be operated by the personnel 4, entrances and locations that can be accessed by the personnel can be defined. By this means in case when personnel 4 who does not have the authorization of access tries to operate that particular machinery, the machine shall not function and he/she will not be able to pass through entrances of which he/she does not have the access to.

Data transfer module 3 regularly receives the frequency constantly transmitted by the safety boots 2 having a passive RFID label 1 and transmits it to the cloud module 6. Consequently, following a potential accident or a disaster, data regarding how many personnel 4 were located within the work area 7 can be obtained and their identity can be determined. Search and rescue teams can organize and direct the search and rescue efforts by means of these data. Data transfer module 3 also collects and transmits data automatically regarding how long the personnel 4 stayed in resting areas (cafeteria, restrooms, etc.), how long they worked in areas that they are required to or how long they stayed outside to the cloud module 6. Thus, not only the productivity within the enterprise but also the labor performance among employees can be subjected assessment.

RFID reader 5 is located on the doors positioned inside the working area 7 and the machinery that can be found inside the working area 7. RFID reader 5, in accordance with the transmitted access and authorization data defined to the passive RFID label 1 which is located inside safety boots 2, allows for opening of doors inside the work area 7 and further allows for functioning of machinery.

Cloud module 6 allows for the storing of data transmitted from the data transfer module 3 and by calculating the data concerning labor performance, it produces necessary reporting, warning messages and it further conducts analyses. By storing these data inside cloud module 3, since no harm will come to the cloud module 3 in case of a potential disaster, all data can be accessed.

In order for personnel 4 to start working, he/she has to put on his/her safety boots 2having passive RFID label 1. The personnel 4 who is ready to set at work enters the work area 7 in accordance with his/her authorization through the doors or entrances having RFID readers 5. Data indicating that the personnel 4 who entered the work area 7 is located where he/she is required to be there actively is transmitted by the data transfer module 3 that performs wireless data transfer to the cloud module 6 wherein the data is stored and analyzed. Furthermore, information indicating that which machine within the work area 7 is being operated by the personnel 4 are collected by RFID readers 5 located on that particular machine and transferred to the cloud module 6. In the light of the information provided, necessary reports and warning messages can be produced by means of calculating valuable analyses such as personnel's 4 labor performances, for how long they operated which machine and their labor productivity within the day through the cloud module 6. The subject matter system further comprises the characteristic of sharing these data with institutional resource planning software when necessary.

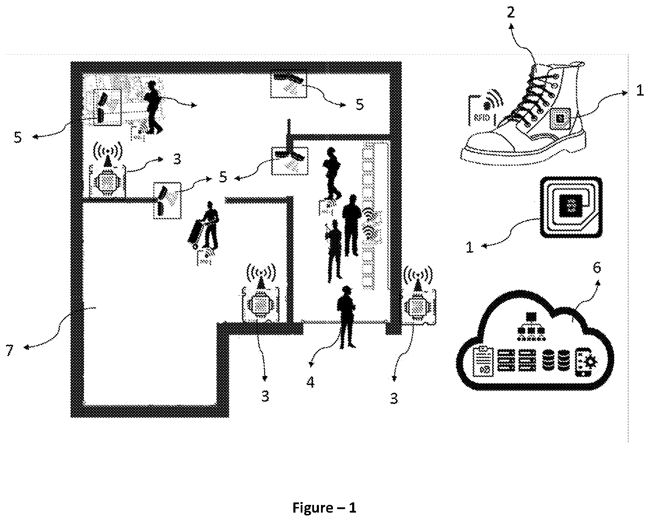

## Claims

1. A personnel monitoring and labor productivity analyzing system comprising:
• safety boots (2) that enclose passive RFID label (1) operating between frequencies of 125 KHz to 960 MHz, that defines credentials of the personnel therein, that determine machinery which can be operated by the personnel (4), the doors and entrances he/she will have access to and that contains the credentials of the personnel,
• a data transfer module (3) that regularly receives the frequency transmitted by the safety boots (2) and that transmits it to a cloud module (6) and thus allowing the constant receiving of the data regarding the number of personnel (4) inside the work area and their credentials,
• RFID readers (5) that are located on the doors and entrances positioned inside the work area (7) and found on the machinery located inside the work area (7) and that allow for opening of doors belonging to the work area (7) and that further allow for operating of machines found within the working area in accordance with authorization data transmitted by the safety boots (2), wherein information indicating that which machine within the work area (7) is being operated by the personnel (4) are collected by RFID readers located on that particular machine and transferred to the cloud module (6),
• the cloud module (6) that stores the data received from the data transfer module (3) and performs reporting by means of calculating labor performance information, that produces warning messages and that conducts analyses through the collected data, and provides the data obtained from the data transfer module (3) that regularly senses the frequency emitted by the safety boots (2) with a passive RFID label (1) regarding location, number, and credentials of personnel (4), thus determining how many personnel (4) are within the work area (7) and identifying the relevant personnel after a potential disaster to search and rescue teams.

2. Personnel monitoring and labor productivity analyzing system according to Claim 1 **characterized by** comprising: the passive RFID label (1) inside the safety boots (2) does not require energy.

3. Personnel monitoring and labor productivity analyzing system according to Claim 1 **characterized by** comprising: the data transfer module (3) that automatically collects and reports data regarding how long employees stayed within resting places, for how long they worked in units they are required to or how long employees stayed outside through the personnel's (4) location data obtained from the safety boots (2) and that transfers this data to the cloud module (6).

4. Personnel monitoring and labor productivity analyzing system according to Claim 1 **characterized by** comprising: by the medium of authorization data input to the passive RFID label (1), the machinery that can be operated by the personnel (4), entrances and locations that can be accessed by the personnel (4) are defined, wherein a machine is prevented from operating when a personnel (4) without the machine operation access permission desires to operate the machine.

5. Personnel monitoring and labor productivity analyzing system according to Claim 1 **characterized by** comprising: the cloud module (6) that allows for processing data through matching the work environment and operating machine with the safety boots (2) comprising the passive RFID label (1) by means of the wireless mesh network topology and for analyzing the work productivity and provides alerts with effective reporting.

## Patentansprüche

1. Ein System zur Überwachung des Personals und zur Analyse der Arbeitsproduktivität, das Folgendes umfasst:
• Sicherheitsstiefel (2), die ein passives RFID-Etikett (1) enthalten, das mit Frequenzen von 125 KHz bis 960 MHz arbeitet, das die Berechtigungsnachweise des Personals darin definiert, das die Maschinen bestimmt, die vom Personal (4) bedient werden können, die Türen und Eingänge, zu denen es Zugang hat, und das die Berechtigungsnachweise des Personals enthält,
• ein Datenübertragungsmodul (3), das regelmäßig die von den Sicherheitsschuhen (2) gesendete Frequenz empfängt und sie an ein Cloud-Modul (6) überträgt und so den ständigen Empfang der Daten über die Anzahl der Personen (4) im Arbeitsbereich und ihre Berechtigungsnachweise ermöglicht,
• RFID-Lesegeräte (5), die sich an den Türen und Eingängen befinden, die innerhalb des Arbeitsbereichs (7) positioniert sind, und die sich an den Maschinen befinden, die sich innerhalb des Arbeitsbereichs (7) befinden, und die das Öffnen von Türen ermöglichen, die zu dem Arbeitsbereich (7) gehören, und die ferner das Bedienen von Maschinen ermöglichen, die sich innerhalb des Arbeitsbereichs befinden, in Übereinstimmung mit Autorisierungsdaten, die von den Sicherheitsstiefeln (2) übertragen werden, wobei Informationen, die angeben, welche Maschine innerhalb des Arbeitsbereichs (7) von dem Personal (4) bedient wird, von RFID-Lesegeräten gesammelt werden, die sich an dieser bestimmten Maschine befinden, und an das Cloud-Modul (6) übertragen werden,
• das Cloud-Modul (6), das die von dem Datenübertragungsmodul (3) empfangenen Daten speichert und eine Berichterstattung mittels Berechnung von Arbeitsleistungsinformationen durchführt, das Warnmeldungen erzeugt und das Analysen über die gesammelten Daten durchführt und die von dem Datenübertragungsmodul (3) erhaltenen Daten bereitstellt, das regelmäßig die von den Sicherheitsstiefeln (2) mit einem passiven RFID-Etikett (1) ausgesendete Frequenz bezüglich des Standorts, der Anzahl und der Berechtigungsnachweise des Personals (4) erfasst, wodurch bestimmt wird, wie viele Personen (4) sich innerhalb des Arbeitsbereichs (7) befinden, und das relevante Personal nach einer möglichen Katastrophe an Such- und Rettungsteams identifiziert.

2. Personalüberwachungs- und Arbeitsproduktivitätsanalysesystem nach Anspruch 1, **dadurch gekennzeichnet, dass** das passive RFID-Etikett (1) im Inneren der Sicherheitsschuhe (2) keine Energie benötigt.

3. Personalüberwachungs- und Arbeitsproduktivitätsanalysesystem nach Anspruch 1, **dadurch gekennzeichnet, dass** es Folgendes umfasst: das Datenübertragungsmodul (3), das automatisch Daten darüber sammelt und meldet, wie lange sich die Mitarbeiter innerhalb von Ruheplätzen aufgehalten haben, wie lange sie in Einheiten gearbeitet haben, zu denen sie verpflichtet sind, oder wie lange sich die Mitarbeiter außerhalb aufgehalten haben, und zwar über die Standortdaten des Personals (4), die von den Sicherheitsstiefeln (2) erhalten wurden, und das diese Daten an das Cloud-Modul (6) überträgt.

4. Personalüberwachungs- und Arbeitsproduktivitätsanalysesystem nach Anspruch 1, **dadurch gekennzeichnet, dass** es Folgendes umfasst: durch das Medium der Autorisierungsdaten, die in das passive RFID-Etikett (1) eingegeben werden, werden die Maschinen, die von dem Personal (4) bedient werden können, Eingänge und Orte, auf die das Personal (4) zugreifen kann, definiert, wobei verhindert wird, dass eine Maschine in Betrieb ist, wenn ein Personal (4) ohne die Zugangsberechtigung für den Maschinenbetrieb die Maschine bedienen möchte.

5. Personalüberwachungs- und Arbeitsproduktivitätsanalysesystem nach Anspruch 1, **dadurch gekennzeichnet, dass** es Folgendes umfasst: das Cloud-Modul (6), das die Verarbeitung von Daten durch den Abgleich der Arbeitsumgebung und der Betriebsmaschine mit den Sicherheitsschuhen (2), die das passive RFID-Etikett (1) umfassen, mittels der drahtlosen Maschennetztopologie und die Analyse der Arbeitsproduktivität ermöglicht und Warnmeldungen mit effektiver Berichterstattung bereitstellt.

## Revendications

1. Système de surveillance de personnel et d'analyse de la productivité du travail comprenant :
• Des bottes de sécurité (2) qui renferment une étiquette RFID passive (1) fonctionnant entre les fréquences de 125 KHz à 960 MHz, qui définit les informations d'identification du personnel qui s'y trouve, qui détermine les machines pouvant être utilisées par le personnel (4), les portes et les entrées auxquelles il aura accès et qui contient les informations d'identification du personnel,
• un module de transfert de données (3) qui reçoit régulièrement la fréquence transmise par les bottes de sécurité (2) et qui la transmet à un module cloud (6) et qui permet ainsi la réception constante des données concernant le nombre de personnel (4) présent dans la zone de travail et leurs identifiants,
• des lecteurs RFID (5) qui sont situés sur les portes et les entrées à l'intérieur de la zone de travail (7) et sur les machines situées à l'intérieur de la zone de travail (7), permettant d'ouvrir les portes de la zone de travail (7) et d'utiliser les machines situées dans la zone de travail conformément aux données d'autorisation transmises par les bottes de sécurité (2), dans lequel les informations indiquant quelle machine dans la zone de travail (7) est actionnée par le personnel (4) sont collectées par les lecteurs RFID situés sur cette machine particulière et transférées au module cloud (6),
• le module cloud (6) qui stocke les données reçues du module de transfert de données (3) et effectue des rapports en calculant les informations sur les performances de travail, qui génère des messages d'avertissement et qui effectue des analyses à partir des données collectées, et fournit les données obtenues du module de transfert de données (3) qui détecte régulièrement la fréquence émise par les bottes de sécurité (2) équipées d'une étiquette RFID passive (1) concernant l'emplacement, le nombre et les identifiants du personnel (4), déterminant ainsi le nombre de membres du personnel (4) présents dans la zone de travail (7) et identifiant le personnel concerné après une catastrophe potentielle pour les équipes de recherche et de sauvetage.

2. Système de surveillance du personnel et d'analyse de la productivité du travail selon la revendication 1, **caractérisé en ce qu'**il comprend: l'étiquette RFID passive (1) à l'intérieur des bottes de sécurité (2) ne nécessite pas d'énergie.

3. Système de surveillance du personnel et d'analyse de la productivité du travail selon la revendication 1, **caractérisé en ce qu'**il comprend: le module de transfert de données (3) qui collecte et communique automatiquement des données concernant la durée pendant laquelle les employés sont restés dans les lieux de repos, la durée pendant laquelle ils ont travaillé dans les unités où ils sont tenus de le faire ou la durée pendant laquelle les employés sont restés à l'extérieur grâce aux données de localisation du personnel (4) obtenues à partir des bottes de sécurité (2) et qui transfère ces données au module cloud (6).

4. Système de surveillance du personnel et d'analyse de la productivité du travail selon la revendication 1, **caractérisé en ce qu'**il comprend: par le biais de données d'autorisation saisies dans l'étiquette RFID passive (1), les machines qui peuvent être utilisées par le personnel (4), les entrées et les emplacements accessibles au personnel (4) sont définis, dans lesquels une machine ne peut pas être utilisée lorsqu'un membre du personnel (4) ne disposant pas de l'autorisation d'utilisation de la machine souhaite l'utiliser.

5. Système de surveillance du personnel et d'analyse de la productivité du travail selon la revendication 1, **caractérisé en ce qu'**il comprend: le module cloud (6) qui permet de traiter les données en faisant correspondre l'environnement de travail et la machine en fonctionnement avec les bottes de sécurité (2) comprenant l'étiquette RFID passive (1) au moyen de la topologie de réseau maillé sans fil, et d'analyser la productivité du travail et de fournir des alertes avec des rapports efficaces.
